# DEMANDE DE BREVET EUROPEEN

(11) **EP 2 112 017 A1**
(43) Date de publication de la demande: **28.10.2009**
(21) Numéro de dépôt: 09290300.4
(22) Date de dépôt: 23.04.2009
(51) Int. Cl.: B60N 2/48, B60N 2/58, B60N 2/60, F16G 11/02

(54) **Elément de capitonnage d'un siège de véhicule automobile**

(30) Priorité: 24.04.2008 FR 0802317
(71) Demandeur: CENTRE D'ETUDE ET RECHERCHE POUR L'AUTOMOBILE ( CERA), 51100 Reims (FR)
(72) Inventeur: Bonfils, Xavier, 51100 Reims (FR)
(74) Mandataire: Sayettat, Julien Christian

(57) **Abrégé**

L'invention concerne un élément (1) de capitonnage d'un siège de véhicule automobile, ledit élément comprenant une palette (2) structurelle d'envers à base de matière plastique moulée, un format (3) de matériau de revêtement disposé en regard de la face avant (16) de ladite palette, la périphérie dudit format comprenant un moyen de logement (4) d'un cordon (5) en coulissement, une zone périphérique (6) dudit format étant repliée contre une zone périphérique (7) de la face d'envers (13) de ladite palette, ledit cordon disposé dans ledit moyen de logement étant tendu de sorte à mettre en tension ledit format, ladite palette comprend, issu de matière de ladite face d'envers, un dispositif de blocage (8) des parties extrêmes dudit cordon, ledit dispositif étant agencé de sorte à permettre - respectivement bloquer - le glissement d'au moins une desdites parties extrêmes dans le sens de serrage - respectivement desserrage - dudit cordon.

## Description

L'invention concerne un élément de capitonnage d'un siège de véhicule automobile.

Il est connu de réaliser un élément de capitonnage d'un siège de véhicule automobile, tel qu'un appui-tête, ledit élément comprenant :
- une palette structurelle d'envers à base de matière plastique moulée,
- un format de matériau de revêtement disposé en regard de la face avant de ladite palette, la périphérie dudit format comprenant un moyen de logement d'un cordon en coulissement, une zone périphérique dudit format étant repliée contre une zone périphérique de la face d'envers de ladite palette,
- ledit cordon disposé dans ledit moyen de logement étant tendu de sorte à mettre en tension ledit format.

Le cordon est mis usuellement en tension par blocage par un noeud, ce qui nécessite une main d'oeuvre coûteuse, ou par une pièce de blocage spécifique associée aux extrémités du cordon et permettant d'effectuer cette mise en tension, ce qui entraîne un surcoût lié à la réalisation de cette pièce et à son montage sur le cordon.

L'invention a pour but de pallier ces inconvénients.

A cet effet, l'invention propose un élément de capitonnage d'un siège de véhicule automobile, ledit élément comprenant :
- une palette structurelle d'envers à base de matière plastique moulée,
- un format de matériau de revêtement disposé en regard de la face avant de ladite palette, la périphérie dudit format comprenant un moyen de logement d'un cordon en coulissement, une zone périphérique dudit format étant repliée contre une zone périphérique de la face d'envers de ladite palette,
- ledit cordon disposé dans ledit moyen de logement étant tendu de sorte à mettre en tension ledit format,
ladite palette comprenant, issu de matière de ladite face d'envers, un dispositif de blocage des parties extrêmes dudit cordon, ledit dispositif étant agencé de sorte à permettre - respectivement bloquer - le glissement d'au moins une desdites parties extrêmes dans le sens de serrage - respectivement desserrage - dudit cordon.

Ainsi, le dispositif de blocage est intégré à la palette, ce qui évite d'avoir à faire un noeud ou de mettre en oeuvre une pièce de blocage spécifique.

D'autres particularités et avantages de l'invention apparaîtront dans la description qui suit, faite en référence aux figures jointes dans lesquelles :
- la figure 1 est une représentation schématique en perspective d'un élément comprenant un dispositif de blocage selon une première réalisation,
- la figure 2 est une représentation schématique en coupe de l'élément de la figure 1,
- la figure 3 est une représentation schématique agrandie en perspective d'un moyen de blocage de l'élément de la figure 1,
- les figures 4a à 4d sont des vues schématiques de face du moyen de blocage de la figure 3, une partie extrême du cordon étant disposé dans ledit moyen dans des étapes successives de montage jusqu'à une première configuration de montage final,
- les figures 5a à 5d sont des vues schématiques de face d'un moyen de blocage d'un dispositif de blocage selon une deuxième réalisation, une partie extrême du cordon étant disposé dans ledit moyen dans des étapes successives de montage jusqu'à une deuxième configuration de montage final,
- la figure 6 est une représentation schématique en coupe partielle du moyen de blocage des figures 5, ledit moyen de blocage coopérant avec un moyen de rapprochement des saillies dudit moyen de blocage, ledit moyen de rapprochement étant solidaire d'une coque de masquage associée en regard de la face d'envers de la palette pourvue dudit moyen de blocage.

En référence aux figures, on décrit un élément 1 de capitonnage d'un siège de véhicule automobile, ledit élément comprenant :
- une palette 2 structurelle d'envers à base de matière plastique moulée,
- un format 3 de matériau de revêtement disposé en regard de la face avant 16 de ladite palette, la périphérie dudit format comprenant un moyen de logement 4 d'un cordon 5 en coulissement, une zone périphérique 6 dudit format étant repliée contre une zone périphérique 7 de la face d'envers 13 de ladite palette,
- ledit cordon disposé dans ledit moyen de logement étant tendu de sorte à mettre en tension ledit format,
ladite palette comprenant, issu de matière de ladite face d'envers, un dispositif de blocage 8 des parties extrêmes dudit cordon, ledit dispositif étant agencé de sorte à permettre - respectivement bloquer - le glissement d'au moins une desdites parties extrêmes dans le sens de serrage - respectivement desserrage - dudit cordon.

Dans les réalisations représentées, le dispositif de blocage 8 comprend au moins un moyen de blocage 10 d'une partie extrême du cordon 5, ledit moyen comprenant un jeu de deux saillies 11, lesdites saillies comprenant chacune un muret 12 s'étendant perpendiculairement à la face d'envers 13, lesdits murets définissant un goulot 17 de logement de ladite partie extrême, ledit goulot comprenant deux parois 18 parallèles dont l'écart 19 est défini de manière à réaliser un contact serrant de ladite partie extrême entre lesdites parois.

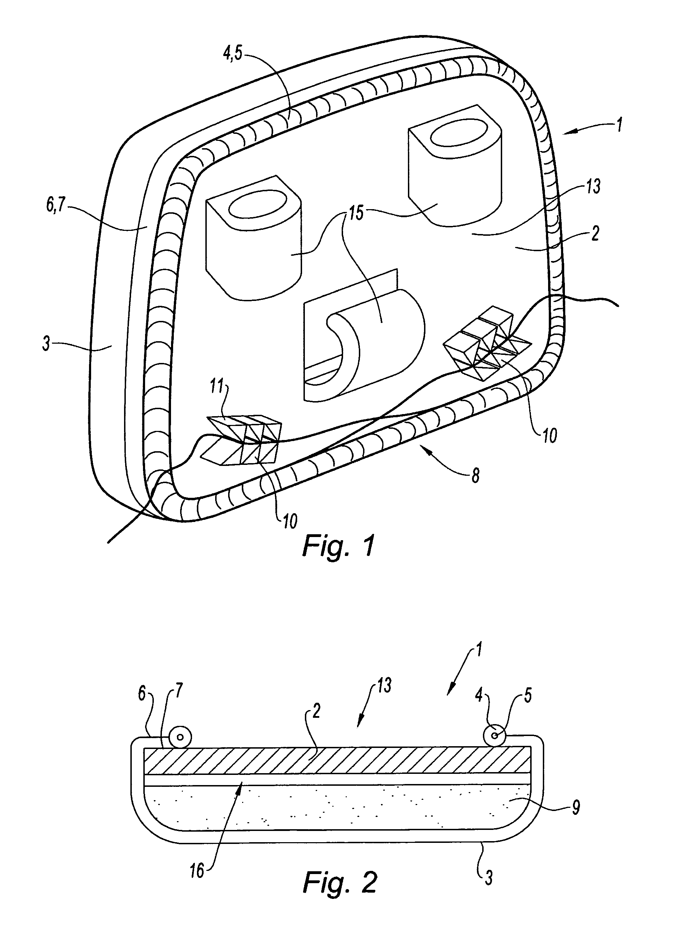

Comme représenté sur la figure 1 du premier mode de réalisation, le dispositif de blocage 8 comprend deux moyens de blocage 10 de respectivement chaque partie extrême de cordon 5.

Il peut bien sûr en être de même pour le deuxième mode de réalisation

Le matériau constitutif des saillies 11, à base de la matière plastique constitutive de la palette 2, permet à ces dernières de présenter une aptitude à la déformation élastique. Il en résulte que l'effort de serrage de la partie extrême du cordon 5 augmente à mesure qu'elle est enfoncée dans le goulot 17.

Il peut être prévu à l'entrée du goulot 17, de manière non représentée, une forme évasée permettant de faciliter l'introduction de la partie extrême avant son insertion en fond de goulot 17 permettant un serrage optimal.

Dans la première réalisation, comme illustré en figure 1, les deux parties extrêmes sont montées glissantes chacune dans un moyen de blocage 10 spécifique.

En variante non représentée, une des parties extrêmes du cordon 5 peut être fixée non glissante, par exemple au moyen d'un noeud, la mise en tension dudit cordon se faisant par traction sur l'autre partie extrême disposée dans le moyen de blocage 10.

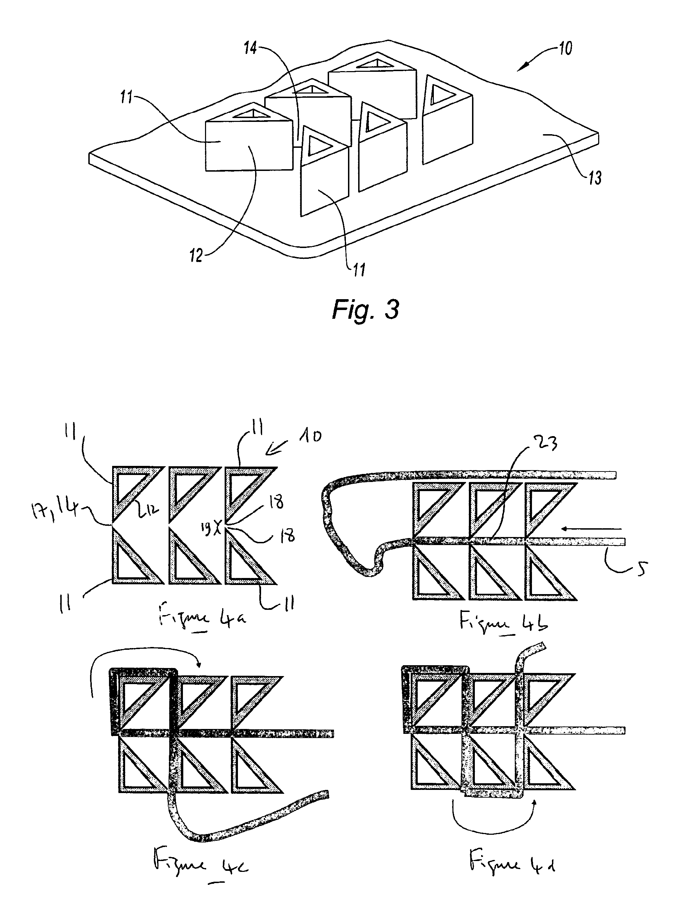

Selon le premier mode de réalisation, les murets 12 définissent, comme on le voit notamment sur les figures 4, un V dont la partie centrale 14 est évidée de sorte à former le goulot 17, dont les parois 18 sont sous forme d'arêtes parallèles, l'écart 19 entre lesdites parois étant défini de manière à permettre un coulissement de la partie extrême dans le sens défini par la pointe du V, par déformation élastique desdits murets, et son blocage dans le sens inverse.

En outre, un moyen de blocage 10 comprend une pluralité de jeux de saillies 11, ce qui permet de sécuriser le blocage de la partie extrême.

Comme représenté en figure 4d, la partie extrême du cordon 5 comprend une zone rectiligne 23 suivie d'une zone enroulée en tension autour d'au moins deux saillies 11 disposées de part et d'autre de l'axe défini par ladite zone rectiligne, de manière à rapprocher, du fait de sa capacité de déformation élastique, au moins une saillie 11 de la saillie qui lui fait face et à assurer un blocage accentué de ladite partie extrême.

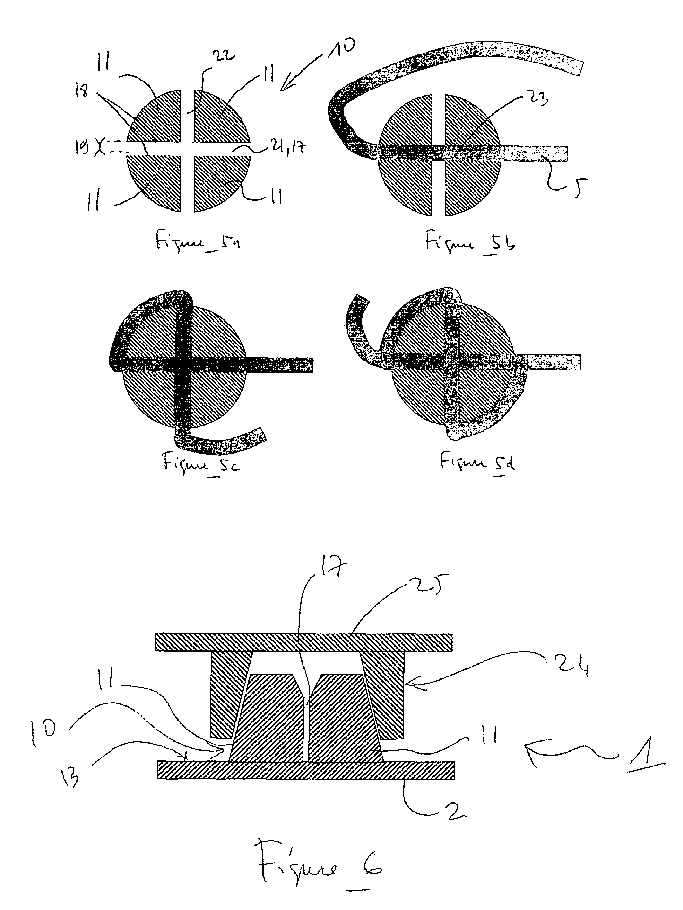

Selon le deuxième mode de réalisation, représenté en figures 5, les murets 12 sont parallèles et forment les parois 18 du goulot 17.

Le moyen de blocage 10 comprend quatre saillies 11 saillant de la face arrière 13, lesdites saillies étant ici en géométrie de quart de cylindre et s'inscrivant dans une enveloppe sensiblement cylindrique, lesdites saillies étant séparées deux à deux par une première tranchée 21 définissant le goulot 17 et par une deuxième tranchée 22 de géométrie analogue et coupant ladite première tranchée, ici à angle droit.

Comme représenté en figure 5d, la partie extrême du cordon 5 comprend une zone rectiligne 23 suivie d'une zone enroulée en tension autour d'au moins deux saillies 11 disposées de part et d'autre de l'axe défini par ladite zone rectiligne, de manière à rapprocher, du fait de sa capacité de déformation élastique, au moins une saillie 11 de la saillie qui lui fait face et à assurer un blocage accentué de ladite partie extrême.

Dans ce cas, la partie extrême passe dans la deuxième tranchée 22 qui réalise un serrage analogue à celui réalisé par la première tranchée 21.

En outre, la partie extrême est réinsérée dans la première tranchée 21, ce qui contribue à assurer un blocage optimisé.

Selon la réalisation de la figure 6, le moyen de blocage 10 coopère avec un moyen de rapprochement 24 des saillies 11, ledit moyen de rapprochement étant intégré - notamment issu de matière - à une coque 25 de masquage associée en regard de la face d'envers 13 de la palette 2 pourvue dudit moyen de blocage.

Le moyen de blocage 10 s'inscrit ici dans une enveloppe conique, le moyen de rapprochement 24 présentant une géométrie complémentaire permettant, lorsque l'on associe la coque 25 en regard de la face d'envers 13, un serrage accentué de la partie extrême insérée dans le goulot 17, ce qui permet de sécuriser son maintien au cours de la vie de l'élément 1.

De façon non représentée, un agencement analogue peut être transposé à la première réalisation représentée en figures 1 à 4.

Dans les deux réalisations présentées, on effectue, par mise en place de la partie extrême dans le goulot 17, un blocage préliminaire.

L'enroulement de la partie extrême décrit ci-dessus pour les deux modes de réalisation permet de sécuriser ce blocage préliminaire et de garantir le bon maintien de la tension du cordon 5 au cours de l'utilisation de l'élément 1.

Comme représenté en figure 1, l'élément 1 comprend un moyen d'assemblage 15, ici sous forme de deux gaines et un clip, d'une armature, formée notamment dans le cas d'un appui-tête d'un tube métallique conformé en U, ledit moyen étant issu de moulage de la face d'envers 13 de ladite palette.

Le moyen de logement 4 peut notamment être formé par un ourlet ou un surjet.

Comme représenté en figure 1, l'élément 1 comprend en outre un bloc 9 de capitonnage disposé entre la palette 2 et le format 3.

Ces différentes caractéristiques sont bien sûr applicables à tous les modes de réalisation, et en particulier au deuxième mode évoqué ci-dessus.

## Revendications

1. Elément (1) de capitonnage d'un siège de véhicule automobile, ledit élément comprenant :
• une palette (2) structurelle d'envers à base de matière plastique moulée,
• un format (3) de matériau de revêtement disposé en regard de la face avant (16) de ladite palette, la périphérie dudit format comprenant un moyen de logement (4) d'un cordon (5) en coulissement, une zone périphérique (6) dudit format étant repliée contre une zone périphérique (7) de la face d'envers (13) de ladite palette,
• ledit cordon disposé dans ledit moyen de logement étant tendu de sorte à mettre en tension ledit format,
ledit élément étant **caractérisé en ce que** ladite palette comprend, issu de matière de ladite face d'envers, un dispositif de blocage (8) des parties extrêmes dudit cordon, ledit dispositif étant agencé de sorte à permettre - respectivement bloquer - le glissement d'au moins une desdites parties extrêmes dans le sens de serrage - respectivement desserrage - dudit cordon.

2. Elément selon la revendication 1, **caractérisé en ce que** le dispositif de blocage (8) comprend au moins un moyen de blocage (10) d'une partie extrême du cordon (5), ledit moyen comprenant un jeu de deux saillies (11), lesdites saillies comprenant chacune un muret (12) s'étendant perpendiculairement à la face d'envers (13), lesdits murets définissant un goulot (17) de logement de ladite partie extrême, ledit goulot comprenant deux parois (18) parallèles dont l'écart (19) est défini de manière à réaliser un contact serrant de ladite partie extrême entre lesdites parois.

3. Elément selon la revendication 2, **caractérisé en ce que** les murets (12) définissent un V dont la partie centrale (14) est évidée de sorte à former le goulot (17) dont les parois (18) sont sous forme d'arêtes parallèles, l'écart (19) entre lesdites parois étant défini de manière à permettre un coulissement de la partie extrême dans le sens défini par la pointe du V et son blocage dans le sens inverse.

4. Elément selon la revendication 3, **caractérisé en ce qu'**un moyen de blocage (10) comprend une pluralité de jeux de saillies (11).

5. Elément selon l'une quelconque des revendications 3 ou 4, **caractérisé en ce que** la partie extrême du cordon (5) comprend une zone rectiligne (23) suivie d'une zone enroulée en tension autour d'au moins deux saillies (11) disposées de part et d'autre de l'axe défini par ladite zone rectiligne, de manière à rapprocher au moins une saillie 11 de la saillie qui lui fait face et à assurer un blocage accentué de ladite partie extrême.

6. Elément selon la revendication 2, **caractérisé en ce que** les murets (12) sont parallèles et forment les parois (18) du goulot (17).

7. Elément selon la revendication 6, **caractérisé en ce que** le moyen de blocage (10) comprend quatre saillies (11) saillant de la face arrière (13), lesdites saillies étant séparées deux à deux par une première tranchée (21) définissant le goulot (17) et par une deuxième tranchée (22) de géométrie analogue et coupant ladite première tranchée.

8. Elément selon la revendication 7, **caractérisé en ce que** la partie extrême du cordon (5) comprend une zone rectiligne (23) suivie d'une zone enroulée en tension autour d'au moins deux saillies (11) disposées de part et d'autre de l'axe défini par ladite zone rectiligne, de manière à rapprocher au moins une saillie (11) de la saillie qui lui fait face et à assurer un blocage accentué de ladite partie extrême.

9. Elément selon l'une quelconque des revendications 1 à 8, **caractérisé en ce qu'**il comprend un moyen d'assemblage (15) d'une armature, ledit moyen étant issu de moulage de la face d'envers (13) de ladite palette.

10. Elément selon l'une quelconque des revendications 1 à 9, **caractérisé en ce que** le moyen de blocage (10) coopère avec un moyen de rapprochement (24) des saillies (11), ledit moyen de rapprochement étant intégré à une coque (25) de masquage associée en regard de la face d'envers (13) de la palette (2) pourvue dudit moyen de blocage.
